# DEMANDE DE BREVET EUROPEEN

(11) **EP 0 885 919 A1**
(43) Date de publication de la demande: **23.12.1998**
(21) Numéro de dépôt: 98111291.5
(22) Date de dépôt: 18.06.1998
(51) Int. Cl.: C08J 7/04

(54) **Films barriere composites metallisés**

(30) Priorité: 19.06.1997 FR 9707882
(71) Demandeur: TORAY PLASTICS EUROPE SA, 01701 Miribel (FR)
(72) Inventeur: Corsi, Philippe, Sainte-Euphèmie, 01600 Trévoux (FR); Prissette, Michel, 69500 Bron (FR)
(74) Mandataire: Kügele, Bernhard

(57) **Abrégé**

La présente invention concerne des films barrière composites métallisés comportant une couche d'alcool polyvinylique sur un film support en polyester, soit directement, soit par l'intermédiaire d'une couche primaire d'ancrage, ladite couche d'alcool polyvinylique étant elle-même revêtue d'une couche métallique.

Ces films barrière composites à base de film polyester peuvent également comporter en outre sur la face métallisée une couche d'un polymère thermoscellable.

Enfin l'invention concerne aussi des films barrière métallisés qui comportent d'une face à l'autre la succession suivante de couches, un film en polyester (A1), éventuellement une couche primaire d'ancrage, une couche d'alcool polyvinylique (B1), une couche métallique (C1), une couche d'un adhésif (D), une couche métallique (C2), une couche d'alcool polyvinylique (B2), éventuellement une couche primaire d'ancrage, et un film en polyester (A2).

## Description

La présente invention concerne des films barrière composites métallisés comportant une couche d'alcool polyvinylique et une couche métallique sur un film support en polyester.

Les films pour emballage doivent posséder des propriétés barrière importantes, vis-à-vis des différents gaz, oxygène, azote, gaz carbonique, vapeur d'eau, tout en ayant également des propriétés de résistance aux contraintes mécaniques et thermiques, d'absence de toxicité, leur absence d'odeur ou de goût, ainsi que pour certaines applications une transparence suffisante.

Les polyesters possèdent les propriétés nécessaires et sont pour cela largement utilisés dans le domaine de l'emballage. Cependant, leurs propriétés de barrière aux gaz peuvent limiter leur utilisation dans les applications nécessitant une protection importante des produits emballés contre l'action des gaz extérieurs, en particulier contre l'action de l'oxygène de l'air, ou à l'inverse ne pas permettre de maintenir constante la composition en gaz à l'intérieur des emballages.

Afin de pallier cet inconvénient, il a été proposé dans le brevet GB-A-1 126 952 de déposer sur un film polymérique une solution d'alcool polyvinylique, afin de créer une couche d'alcool polyvinylique, ce dernier composé ayant de bonnes propriétés barrière aux gaz. Afin de permettre une bonne adhésion de la couche d'alcool polyvinylique sur les films en acétate de cellulose, en polycarbonate ou en polytéréphtalate d'éthylène, une couche intermédiaire d'un adhésif en polyuréthanne est disposée entre le film de base et la couche d'alcool polyvinylique.

Les propriétés peuvent encore être améliorées par la présence sur la face externe de la couche d'alcool polyvinylique d'une couche métallique.

La présente invention est constituée par des films barrière composites métallisés (F1) à base de film polyester, caractérisés en ce que le film polyester (A) comporte sur l'une de ses faces une couche d'alcool polyvinylique (B), soit directement, soit par l'intermédiaire d'une couche primaire d'ancrage, l'alcool polyvinylique présentant un taux d'hydrolyse égal ou supérieur à 90 % et ladite couche d'alcool polyvinylique étant elle-même revêtue d'une couche métallique (C).

Plus précisément, elle concerne un film composite métallisé, à base de polyester et ayant des propriétés barrière vis-à-vis des gaz améliorées, caractérisé en ce qu'il comporte un film de base polyester (A) étiré biaxialement ayant de 5 µm à 50 µm, revêtu sur l'une de ses deux faces par une couche d'alcool polyvinylique, soit directement, soit par l'intermédiaire d'une couche primaire d'ancrage, ledit alcool polyvinylique ayant un degré de polymérisation moyen en nombre égal ou supérieur à 350 et un taux d'hydrolyse égal ou supérieur à 90 % et ladite couche d'alcool polyvinylique étant elle-même revêtue d'une couche métallique, ledit film composite présentant une perméabilité à l'oxygène mesurée à 23°C sous 50 % d'humidité relative, inférieure ou égale à 0,25 cm³/m²/24 h.

De préférence le taux d'hydrolyse de l'alcool polyvinylique entrant dans la structure des films composites de l'invention est égal ou supérieur à 95 %.

Un faux d'hydrolyse (ou de saponification) de 90% de l'alcool polyvinylique signifie que ledit alcool polyvinylique comporte 90 % de motifs alcool vinylique dans sa formule. Les termes taux d'hydrolyse, faux de saponification ou teneur en motifs alcool vinylique seront donc utilisés indifféremment dans le présent texte.

Le polyester constituant le film de base peut être choisi parmi les polyesters auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs glycols aliphatiques. Comme exemple d'acides aromatiques, on peut citer les acides phtalique, téréphtalique, isophtalique, naphtalènedicarboxylique-2,5 ; naphtalène-dicarboxylique-2,6. Ces acides peuvent être associés à une quantité mineure d'un ou plusieurs acides dicarboxliques aliphatiques ou cycloaliphatiques, tels que les acides adipique, azélaïque, hexahydrotéréphtalique. Comme exemples non limitatifs de diols aliphatiques, on peut citer l'éthylèneglycol; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférentiellement, les polyesters filmogènes cristallisables sont des polytéréphtalates ou des polynaphtalènedicarboxylates d'alkylènediol et, en particulier, le polytéréphtalate d'éthylèneglycol (PET) ou de butanediol-1,4 ou des copolyesters comportant au moins 80 % en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 et 0,75 dl/g.

La rugosité moyenne Rz du film de base (A) (telle que définie dans la norme DIN 4768) est inférieure ou égale à 0,30 µm sur sa face comportant la couche d'alcool polyvinylique et de préférence inférieure ou égale à 0,25 µm,.

La face du film ne comportant pas la couche d'alcool polyvinylique, dite face dorsale, doit présenter des propriétés de glissant suffisantes pour permettre une manipulation facile du film, notamment son enroulement sur les différents rouleaux-guides lors des étirages ou son enroulement sur lui-même.

Ces propriétés de glissant peuvent être apportées de différentes manières. Une des façons les plus courantes de procéder consiste à incorporer dans le polyester, avant la transformation en film, des charges solides inertes. Ces charges sont généralement des charges minérales, telles que par exemple la silice, le dioxyde de titane, le dioxyde de Zirconium, l'alumine, les mélanges silice/alumine, les silicates, le carbonate de calcium, le sulfate de baryum. Ces charges peuvent également être constituées de particules de polymères.

Le diamètre médian en volume des charges est en général compris entre 1 et 10 micromètres et de préférence entre 1 et 5 micromètres.

La teneur en charge du film est habituellement comprises entre 0,02 % et 1 % en poids par rapport au poids du polyester.

Ainsi le film de base polyester (A) peut être constitué de deux couches présentant des propriétés de surface, notamment des rugosités, différentes.

L'obtention de tels films dissymétriques peut se faire selon la technique de la coextrusion de 2 polyesters comportant des taux de charges différents et le cas échéant des charges différentes. Commodément le polyester utilisé est le même pour les 2 couches coextrudées et la couche devant recevoir la couche d'alcool polyvinylique est plus faiblement chargée que l'autre couche. Les épaisseurs relatives des 2 couches de polyester constituant le film polyester de base peuvent varier largement.

Généralement, la couche plus faiblement chargée recevant l'alcool polyvinylique a une épaisseur supérieure ou égale à 0,5 µm, de préférence supérieure ou égale à 1,0 µm.

La couche du film polyester recevant l'alcool polyvinylique peut comporter une couche primaire d'ancrage destinée à améliorer l'adhésion de l'alcool polyvinylique. Cette couche primaire d'ancrage peut être réalisée par enduction. Elle peut être constituée notamment par un polymère acrylique, par un polyuréthanne, par un copolyester ou par une polyéthylèneimine.

Cette fonction d'amélioration de l'adhésion de l'alcool polyvinylique sur la surface du film polyester peut également être réalisée par une modification de ladite surface, en utilisant par exemple la technique de coextrusion.

Dans le cadre de l'invention, il n'est pas exclu d'obtenir un film de base en polyester, présentant des propriétés de surface différentes sur les deux faces, par d'autre moyens connus de l'art antérieur.

Ainsi on peut conférer, selon le brevet EP-A-0 378 954, à la face dorsale du film de base un bon glissant, en déposant sur ladite face dorsale un polymère modifié, obtenu par polymérisation radicalaire en phase aqueuse, d'au moins un monomère acrylique et d'un polyester dissipable dans l'eau, dérivé d'au moins un acide aromatique dicarboxylique et d'au moins un diol aliphatique et comportant une pluralité de groupes sulfonyloxy, notamment sulfonate de sodium.

La couche d'alcool polyvinylique peut avoir une épaisseur égale ou inférieure à 2 µm. Cette épaisseur peut si on le souhaite être inférieure ou égale à 0,5 µm, et même à 0,2 µm.

La couche métallique qui est située sur la surface de la couche d'alcool polyvinylique qui n'est pas en contact avec le film polyester, est composé d'un métal pouvant être déposé selon les différentes techniques connues. Le métal est choisi le plus souvent parmi l'aluminium, le cuivre, le chrome, le nickel, l'argent. Pour des raisons pratiques et économiques, le métal mis en oeuvre de préférence est l'aluminium.

L'épaisseur de la couche métallique se situe généralement entre 0,01 µm et 0,06 µm. Ces épaisseurs sont déterminées par la mesure de la densité optique (mesures effectuées sur un appareil de marque MACBETH-TD102). Elles correspondent à des densités optiques de 1 à 3,6.

Très probablement en raison de la présence d'une couche d'alcool polyvinylique, la couche de métal et particulièrement d'aluminium est constituée de cristaux très jointifs de taille homogène. Ce mode de cristallisation peut expliquer les excellentes propriétés barrière observées.

L'invention concerne également des films composites (F2), tels que ceux décrits précédemment, qui comportent en outre sur la face métallisée des films (F1) une couche en polymère thermoscellable.

La couche thermoscellable est de préférence de type polyoléfine (polyéthylènes radicalaires, linéaires, métallocènes, polypropylènes, copolymères éthylène-vinyl acétate, résines ionomères par exemple) ou copolyester. L'épaisseur de cette couche thermoscellable varie habituellement de 20 à 100 micromètres. Ces films complexes peuvent être obtenus par contre-collage à l'aide d'adhésif mono- ou bi-composant (généralement résine polyuréthanne) appliqué en phase solvant organique ou aqueuse ou entièrement solide. Dans les deux premiers cas précédents, l'adhésif est séché préalablement à l'opération de calandrage. Le grammage déposé est fonction de l'utilisation finale du film. Il est généralement compris entre 2 et 4 g/m² en produit sec. Les films F2 peuvent aussi être préparés par extrusion-couchage. Dans ce dernier cas, la face métallisée du film (F1) est préalablement revétue de manière connue d'un primaire d'accrochage.

La couche thermoscellable peut le cas échéant être située sur la face libre du film polyester. Dans ce cas, la face métallisée est de préférence protégée des aggressions mécaniques par une enduction d'un vernis de protection thermorésistant, de type nitrocellulosique ou similaire. Cette face métallisée peut alors éventuellement être imprimée.

Les films complexes ainsi réalisés peuvent servir à la confection d'emballages, tels que sachets, opercules de barquettes, sur-emballages destinés à contenir des produits sensibles à l'oxydation. Ils sont tout particulièrement adaptés au conditionnement sous atmosphère modifiée.

Un autre objet de la présente invention permet notamment de résoudre un problème nouveau qui se pose dans certaines applications nécessitant des niveaux de propriétés barrière très élevés. Ainsi, par exemple, dans le domaine de l'isolation thermique notamment, il est apparu que les mousses, en particulier les mousses en polyuréthanne utilisées fréquemment, possèdent des propriétés isolantes améliorées lorsque les cellules ou alvéoles qu'elles comportent sont vides plutôt que remplies de gaz. Dans le présent texte, on appellera cellules vides les cellules des mousses définies précédemment. Pouvoir réaliser le vide dans ces cellules implique qu'elles communiquent entre elles et avec les parois externes de la mousse (cellules ouvertes). Corrélativement, si l'on veut que lesdites cellules ne se remplissent pas à nouveau de gaz (air, gaz carbonique par exemple), il est indispensable que la mousse obtenue soit protégée par une enveloppe très étanche aux gaz. Ce problème est résolu efficacement par des films barrière composites de l'invention comportant la succession suivante de couches.

La présente invention concerne donc aussi des films barrière composites (F3) qui comportent d'une face à l'autre la succession suivante de couches, un film en polyester (A1), éventuellement une couche primaire d'ancrage, une couche d'alcool polyvinylique (B1), une couche métallique (C1), une couche d'un adhésif (D), une couche métallique (C2), une couche d'alcool polyvinylique (B2), éventuellement une couche primaire d'ancrage, et un film en polyester (A2).

La structure de ces films limite à de très faibles valeurs la perméabilité aux gaz et en particulier à l'oxygène, à l'azote, au gaz carbonique et à la vapeur d'eau. A titre d'exemples, on peut atteindre des valeurs de perméabilité à l'oxygène inférieures à 0,1 cm³/m²/24 h et de perméabilité à la vapeur d'eau de l'ordre de 0,1 g/m²/24 h pour une densité optique de 2,8 de chaque ensemble A/B/C correspondant à un film de type (F1), ces valeurs étant mesurées à 23°C et pour 50 % d'humidité relative.

En outre les films de l'invention possèdent une résistance remarquable aux tensions provenant de leur pliage, flexion ou froissage : ils ne se craquèlent pas, ce qui est un signe de la très bonne adhésion du métal à la couche d'alcool polyvinylique.

L'adhésif (D) est un composé connu qui peut être mono- ou bicomposant. Il peut être notamment choisi parmi les polyuréthannes.

Les films barrière composites (F3) peuvent également comporter en outre une couche d'un polymère thermoscellable sur l'une de leurs faces extérieures polyester.

La couche thermoscellable est de préférence de type polyoléfine (polyéthylènes, polypropylènes, éthylène-vinyl acétate notamment). Ces films complexes peuvent être obtenus par contre-collage à l'aide d'adhésif mono- ou bi-composant, ou par extrusioncouchage. Dans ce dernier cas, la face polyester du film (F3) devant recevoir la couche thermoscellable est préalablement revêtue de manière connue d'un primaire d'accrochage.

Ces films barrière composites (F3) sont donc tout à fait adaptés à l'utilisation comme enveloppes étanches aux gaz pour les mousses d'isolation, plus préférentiellement les mousses à cellules vides telles que définies précédemment.

Il est bien évident que ces films très performants peuvent également être utilisés comme matériau d'emballage, pour d'autres applications que celle qui a été décrite précédemment.

La présente invention concerne également les procédés de préparation des différents films décrits précédemment.

Plus précisément, elle consiste tout d'abord en un procédé de préparation de films composites métallisés (F1) à base d'un film de polyester qui comporte sur une de ses faces une couche d'alcool polyvinylique, ledit procédé étant caractérisé en ce que l'on enduit le film de base en polyester, sur une des ses faces éventuellement revêtue d'une couche primaire d'ancrage, à l'aide d'une solution aqueuse d'alcool polyvnylique, ledit alcool polyvinylique présentant en solution aqueuse à 4 % et à 20°C une viscosité égale ou supérieure à 4 mPa.s et un taux d'hydrolyse égal ou supérieur à 90 %, et en ce que l'on dépose sur la couche d'alcool polyvinylique une couche métallique.

Comme indiqué précédemment la couche d'alcool polyvinylique déposée possède lorsqu'elle est sèche une épaisseur de préférence inférieure ou égale à 2 micromètres.

L'enduction du film de base en polyester par une solution d'alcool polyvinylique peut être réalisée en ligne ou en reprise. On opère de préférence par enduction en ligne.

Encore plus préférentiellement, l'enduction sera réalisée en ligne sur un film de base en polyester étiré monoaxialement, qui sera étiré à nouveau après enduction au moins dans la direction opposée à celle du premier étirage.

Avant l'enduction du film de base, la surface de celui-ci subit généralement un traitement physique (tel que corona, flamme, plasma par exemple) destiné assurer un bon étalement de la couche d'alcool polyvinylique sur ledit film de base. Ce traitement permet d'amener la tension superficielle du film étiré monoaxialement à une valeur supérieure à celle de l'enduction d'alcool polyvinylique et de préférence à une valeur égale ou supérieure à 54 mN.m.

La solution aqueuse d'alcool polyvinylique mise en oeuvre a généralement une concentration de 1 % à 20 % en poids par poids et de préférence de 5 % à 15 % en poids par poids. La solution est préparée soigneusement, d'abord à froid sous agitation simple, puis en chauffant à une température n'excédant pas 95°C ; après refroidissement, elle est filtrée. Cette solution doit être exempte de gels. L'absence de gels peut être contrôlée grâce à des mesures de turbidité, d'extrait sec et d'indice de réfraction.

L'alcool polyvinylique utilisé dans le procédé de l'invention est un composé disponible dans le commerce. Il peut être utilisé tel quel ou il peut être préparé notamment par hydrolyse de carboxylates de vinyle, plus particulièrement les polyacétates de vinyle ou leurs copolymères riches en motifs acétate de vinyle, tels que les copolymères acétate de vinyle/éthylène (ou EVA). L'alcool polyvinylique utilisé comporte au moins 90 % de motifs alcool vinylique (taux d'hydrolyse égal ou supérieur à 90 %). De préférence il en comporte au moins 95 %.

L'alcool polyvinylique constituant une couche du film barrière de l'invention présente de préférence une viscosité en solution aqueuse à 4 % et à 20°C, mesurée dans un appareil de type Brookfield, égale ou supérieure à 4 centipoises (ou 4 mPa.s), ce qui correspond, avec les incertitudes liées aux mesures, à un degré de polymérisation moyen en nombre égal ou supérieur à 350.

Le choix de la concentration de la solution d'alcool polyvinylique, ainsi que de l'appareillage servant pour l'enduction, est notamment conditionné par l'épaisseur souhaitée de la couche d'alcool polyvinylique.

Sans que le procédé de l'invention puisse se limiter à ce mode de mise en oeuvre, l'enduction en ligne est couramment réalisée à l'aide de rouleaux héliogravés, selon la technique dite "reverse gravure".

Bien que ce ne soit pas non plus limitatif, le film de base en polyester est le plus souvent étiré longitudinalement (c'est-à-dire dans le sens de la machine) avant l'enduction en ligne à l'aide de la solution aqueuse d'alcool polyvinylique.

Cet étirage peut être effectué en une ou plusieurs étapes, de même que l'étirage suivant l'enduction en ligne.

Le dépôt de la couche métallique est réalisé par tout moyen connu. De manière préférentielle, on utilise la technique d'évaporation sous vide du métal.

Les films barrière composites (F2) peuvent être préparés commodément à partir des films (F1) sur lesquels la face métallisée, ou le cas échéant la face libre du film polyester, est revêtue d'une couche d'un polymère thermoscellable, comme indiqué précédemment, par contre-collage à l'aide d'adhésif mono- ou bi-composant, ou par extrusion-couchage. Dans ce dernier cas, la face du film (F1) devant recevoir la couche thermoscellable est préalablement revêtue d'un primaire d'accrochage.

Les films barrière composites (F3) peuvent être commodément préparés à partir de deux films barrière composites (F1) dont les faces métallisées respectives sont collées entre elles à l'aide d'un adhésif tel que ceux indiqués précédemment.

Les exemples qui suivent illustrent l'invention.

### EXEMPLES 1 A 6 ET ESSAIS COMPARATIFS 1 A 6

### Préparation d'un film F1

On prépare un film de base polyester par extrusion à travers une filière plate d'un polytéréphtalate de polyéthylène (PET), comportant 0,08 % de silice obtenue par précipitation de gels et présentant un diamètre moyen de 3,3 µm. Ce film polyester est étiré longitudinalement avec un taux d'étirage de 3,4 ; ensuite la face devant recevoir la couche d'alcool polyvinylique (APV) subit un traitement corona qui amène sa tension superficielle à 58 mN.m.

Le dépôt d'APV est réalisé à l'aide d'un système d'enduction par rouleau gravé, à partir d'une solution aqueuse à 12 % de concentration en poids par poids, soigneusement filtrée (APV à 99 % de motifs alcool vinylique : faux d'hydrolyse de 99 %). Le film enduit subit ensuite un étirage transversal avec un faux de 4, puis il est traité thermiquement à une température de 230°C. Après étirage, le film a une épaisseur de 12 µm, la couche d'APV ayant une épaisseur de l'ordre de 0,1 µm.

Le film enduit est alors placé, sous forme de rouleau, dans une machine de métallisation par évaporation sous vide, qui permet de déposer sur la couche d'APV une couche d'aluminium d'épaisseur choisie.

Les mesures de perméabilité à l'oxygène sont mesurées à 23°C et sous 50 % d'humidité relative, sur un appareil de marque déposée OXTRAN (de la Société Modern Control Inc.).

En suivant le mode opératoire précédent, plusieurs films composites sont préparés avec différentes épaisseurs de la couche métallique (épaisseurs en µm indiquées dans le tableau 1 ci-après).

A titre de films témoins (essais comparatifs), des films composites comportant le même film de base polyester et une couche d'aluminium (d'épaisseur en µm indiquée dans le tableau 1 ci-après), mais ne comportant pas de couche d'APV, sont également préparés.

Les valeurs de perméabilités à l'oxygène des différents films, mesurées dans les conditions mentionnées précédemment, sont rassemblées dans le tableau 1 ci-après.

**Tableau 1**

| **Essai** | **Epaisseur Al** | **Densité optique** | **Perméabilité O2** |
|---|---|---|---|
| Exemple 1 | 0,01 | 0,9 | 0,18 |
| Exemple 2 | 0,015 | 1,25 | 0,15 |
| Exemple 3 | 0,023 | 1,8 | 0,09 |
| Exemple 4 | 0,034 | 2,4 | 0,06 |
| Exemple 5 | 0,05 | 3,2 | <0,01 |
| Essai comparatif 1 | 0,005 | 0,5 | 3,2 |
| Essai comparatif 2 | 0,01 | 0,9 | 1,9 |
| Essai comparatif 3 | 0,015 | 1,25 | 1,2 |
| Essai comparatif 4 | 0,023 | 1,8 | 0,8 |
| Essai comparatif 5 | 0,029 | 2,1 | 0,65 |
| Essai comparatif 6 | 0,038 | 2,6 | 0,5 |

### EXEMPLES 6 A 9 ET ESSAIS COMPARATIFS 7 A 9

Ces exemples et essais comparatifs ont pour but de montrer l'influence de la teneur en motifs alcool vinylique de l'APV utilisé sur les valeurs de perméabilité à l'oxygène du film F1.

Les films sont préparés selon le mode opératoire décrit précédemment, avec deux valeurs d'épaisseur de la couche d'aluminium et en changeant l'APV utilisé.

Les valeurs de perméabilité à l'oxygène sont rassemblées dans le tableau 2 ci-après.

**Tableau 2**

| **Essais** | **Densité** optiqu**e** | **Epaisseur Al** | **Taux d'hydrolyse de l'APV** | **Perméabilité O2** |
|---|---|---|---|---|
| Exemple 6 | 1,5 | 0,02 | 98 | 0,20 |
| Exemple 7 | 1,5 | 0,02 | 90 | 0,25 |
| Exemple 8 | 2,8 | 0,045 | 98 | 0,03 |
| Exemple 9 | 2,8 | 0,045 | 90 | 0,06 |
| Essai comparatif 7 | 1,5 | 0,02 | 85 | 0,45 |
| Essai comparatif 8 | 2,8 | 0,045 | 85 | 0,35 |
| Essai comparatif 9 | 2,8 | 0,045 | 73 | 0,35 |

Les résultats de ces essais montrent qu'il faut utiliser des APV ayant des teneurs en motifs alcool vinylique suffisamment élevées pour atteindre le niveau souhaité de perméabilité à l'oxygène.

### EXEMPLE 10 ET ESSAI COMPARATIF 10

L'exemple 10 correspond à la préparation d'un film composite de type (F2).

Un film de type (F1) est préparé selon le mode opératoire décrit pour les exemples 1 à 6 Le film polyester de base a une épaisseur de 12 µm, une épaisseur d'APV de 0,1 µm et une densité optique de 2,8, ce qui correspond à une épaisseur de la couche d'aluminium de 0,045 µm.

La face métallisée est encollée à l'aide d'un adhésif solvant bicomposant (polyuréthanne de marque Liofol, UR3850/6001) à 35 % d'extrait sec dans l'acétate d'éthyle. Après séchage du solvant, le grammage déposé est de 2,5 g/m². Le film est alors contrecollé par calandrage sur la face encollée, avec un film polyéthylène basse densité linéaire de 50 µm d'épaisseur, préalablement soumis à un traitement corona.

Après réticulation de la colle, le film complexe (F2) obtenu présente les caractéristiques suivantes :
- force de délaminage : 300 g/15 mm
- perméabilité à l'oxygène : 0,125 cm³/m²/24h
- perméabilité à la vapeur d'eau : 0,150 g/m²/24h.

A titre de comparaison (essai comparatif 10), un film composite identique, de même structure à l'exception de la couche d'APV, est préparé. Il présente les caractéristiques suivantes :
- force de délaminage : 250 g/15 mm
- perméabilité à l'oxygène : 1,1 cm³/m²/24h
- perméabilité à la vapeur d'eau : 1,0 g/m²/24h.

### EXEMPLE 11 ET ESSAI COMPARATIF 11

L'exemple 11 correspond à la préparation d'un film composite de type (F3).

Un film de type (F1) est préparé selon le mode opératoire décrit pour les exemples 1 à 5. Le film polyester de base a une épaisseur de 12 µm, une épaisseur d'APV de 0,1 µm et une densité optique de 2,8, ce qui correspond à une épaisseur de la couche d'aluminium de 0,045 µm.

La face métallisée est encollée à l'aide d'un adhésif solvant bicomposant (polyuréthanne de marque Liofol, UR3850/6001) à 35 % d'extrait sec dans l'acétate d'éthyle. Après séchage du solvant, le grammage déposé est de 2,5 g/m². Le film est alors contrecollé par calandrage sur la face encollée, avec le même film (F1) non encollé, de telle façon que les couches métalliques des deux films soient en regard l'une de l'autre. On obtient ainsi un film composite de type (F3), qui est lui-même contrecollé, à l'aide du même adhésif sur une de ses faces PET extérieures, avec un film polyéthylène basse densité linéaire de 50 µm d'épaisseur, préalablement soumis à un traitement corona.

Après réticulation de la colle, le film complexe (F3) obtenu présente les caractéristiques suivantes :
- force de délaminage F1/F1 : 200 g/15 mm
- force de délaminage F1/PE : 450 g/15 mm
- perméabilité à l'oxygène : 0,06 cm³/m²/24h
- perméabilité à la vapeur d'eau : 0,09 g/m²/24h.

Les caractéristiques du film ne sont pas modifiées après froissage.

A titre de comparaison, on a préparé un film identique au film de type (F3) de l'exemple 11, mais ne comportant aucune couche d'APV. Ce film présente des perméabilités à l'oxygène et à la vapeur d'eau, mesurées dans les mêmes conditions que pour l'exemple 11, qui sont deux fois plus élevées que celles du film selon l'invention.

Avec chacun des deux films préparés dans l'exemple 11 et l'essai comparatif 11, on a préparé un sachet ouvert aux deux extrémités. Dans chaque sachet, on a placé un pain identique de mousse à cellules ouvertes (telle que décrite précédemment dans la description). Les sachets contenant les pains de mousse sont placés à plat dans un caisson à vide, les extrémités ouvertes des sachets étant disposées de telle sorte qu'elles puissent être scellées au moment souhaité. On crée un vide poussé dans le caisson et lorsque le vide est bien établi, on scelle hermétiquement les extrémités des deux sachets. On mesure l'évolution de la conductivité thermique des pains de mousse ainsi emballés pendant 250 jours. Une différence de température est établie entre les deux faces opposées du pain de mousse. A l'aide d'une sonde, on suit l'évolution de la température sur la face la plus froide et on calcule à partir de ces mesures le nombre de milliwatts qui ont traversé le pain de mousse en fonction du temps. Cette conductivité thermique est exprimée en milliwatts par mètre d'épaisseur de mousse et par degré Kelvin.

Après 250 jours, on observe pour la mousse emballée avec le film de l'exemple 11 une valeur de la conductivité thermique de 4 mW/m.K, alors que pour la mousse emballée avec le film de l'essai comparatif 11 cette valeur est de 9 mW/m.K. On observe en outre que la courbe d'évolution de la conductivité thermique de la mousse emballée avec le film de l'exemple 11 atteint un palier à partir de 150 jours, alors que l'évolution de la conductivité thermique de la mousse emballée avec le film de l'essai comparatif 11 croît de manière continue et régulière selon une droite du début à la fin du test.

## Revendications

1. Film barrière composite métallisé (F1) à base de film polyester, caractérisé en ce que le film polyester (A) comporte sur l'une de ses faces une couche d'alcool polyvinylique (B), soit directement, soit par l'intermédiaire d'une couche primaire d'ancrage, l'alcool polyvinylique présentant un taux d'hydrolyse égal ou supérieur à 90 % et ladite couche d'alcool polyvinylique étant elle-même revêtue d'une couche métallique (C).

2. Film barrière (F1) selon la revendication 1, caractérisé en ce qu'il comporte un film de base polyester (A) étiré biaxialement ayant de 5 µm à 50 µm, revêtu sur l'une de ses deux faces par une couche d'alcool polyvinylique, soit directement, soit par l'intermédiaire d'une couche primaire d'ancrage, ledit alcool polyvinylique ayant un degré de polymérisation moyen en nombre égal ou supérieur à 350 et un taux d'hydrolyse égal ou supérieur à 90 % et ladite couche d'alcool polyvinylique étant elle-même revêtue d'une couche métallique, ledit film composite présentant une perméabilité à l'oxygène mesurée à 23°C sous 50 % d'humidité relative, inférieure ou égale à 0,25 cm³/m²/24 h.

3. Film barrière (F1) selon l'une des revendications 1 ou 2, caractérisé en ce que le polyester est choisi parmi les polytéréphtalates et les polynaphtalène-dicarboxylates d'alkylènediol, de préférence le polytéréphtalate d'éthylèneglycol ou de butanediol-1,4, ou des copolyesters comportant au moins 80 % en moles de motifs téréphtalate d'éthylèneglycol.

4. Film barrière (F1) selon l'une des revendications 1 à 3, caractérisé en ce que la couche métallique est composée d'un métal choisi parmi l'aluminium, le cuivre, le chrome, le nickel, l'argent et est de préférence l'aluminium.

5. Film barrière (F1) selon l'une des revendications 1 à 4, caractérisé en ce que l'épaisseur de la couche métallique se situe entre 0,01 µm et 0,06 µm.

6. Film barrière selon l'une des revendications 1 à 5, caractérisé en ce qu'il comporte en outre sur la face métallisée une couche d'un polymère thermoscellable.

7. Film barrière selon l'une des revendications 1 à 6, caractérisé en ce que la couche d'alcool polyvinylique a une épaisseur égale ou inférieure à 2 µm.

8. Film barrière selon la revendication 1, caractérisé en ce qu'il comporte d'une face à l'autre la succession suivante de couches, un film en polyester (A1), éventuellement une couche primaire d'ancrage, une couche d'alcool polyvinylique (B1), une couche métallique (C1), une couche d'un adhésif (D), une couche métallique (C2), une couche d'alcool polyvinylique (B2), éventuellement une couche primaire d'ancrage, et un film en polyester (A2).

9. Film barrière selon la revendication 8, caractérisé en ce qu'il comporte en outre une couche d'un polymère thermoscellable sur l'une de leurs faces extérieures polyester, la couche thermoscellable étant de préférence de type polyoléfine et adhérant sur la face en polyester à l'aide d'une couche d'adhésif ou d'un primaire d'accrochage.

10. Film barrière selon l'une des revendications 8 et 9, caractérisé en ce que chaque couche d'alcool polyvinylique a une épaisseur égale ou inférieure à 2 µm.

11. Procédé de préparation d'un film barrière composite selon l'une des revendications 1 à 5, caractérisé en ce que l'on enduit le film de base en polyester, sur une des ses faces éventuellement revêtue d'une couche primaire d'ancrage, à l'aide d'une solution aqueuse d'alcool polyvinylique, ledit alcool polyvinylique présentant en solution aqueuse à 4 % et à 20°C une viscosité égale ou supérieure à 4 mPa.s et un taux d'hydrolyse égal ou supérieur à 90 %, et en ce que l'on dépose sur la couche d'alcool polyvinylique une couche métallique.

12. Procédé de préparation d'un film barrière composite selon la revendication 6, à partir d'un film (F1), caractérisé en ce que la face métallisée du film (F1) est revêtue d'une couche d'un polymère thermoscellable, par contrecollage à l'aide d'adhésif monoou bi-composant ou par extrusion-couchage, la face métallisée devant recevoir la couche thermoscellable étant alors préalablement revêtue d'un primaire d'accrochage.

13. Procédé de préparation d'un film barrière composite selon l'une des revendications 8 à 10, caractérisé en ce que ledit film est préparé à partir de deux films barrière composites (F1) dont les faces métallisées respectives sont collées entre elles à l'aide d'un adhésif.

14. Utilisation des films selon l'une des revendications 1 à 10 comme emballages.

15. Utilisation des films selon l'une des revendications 8 ou 9 comme enveloppes étanches aux gaz pour les mousses d'isolation, plus préférentiellement les mousses à cellules vides.
